Europäisches Patentamt

(19) European Patent Office

Office européen des brevets

(11) Publication number: **0 100 656**
**B1**

(12) **EUROPEAN PATENT SPECIFICATION**

(45) Date of publication of patent specification: **19.11.87**

(21) Application number: **83304375.5**

(22) Date of filing: **28.07.83**

(51) Int. Cl.⁴: **C 04 B 28/26, C 04 B 28/04, C 09 K 17/00, E 01 C 21/00, E 02 D 3/12**

(54) Stabilising soil.

(30) Priority: **30.07.82 US 404336**
**13.07.83 US 512761**

(43) Date of publication of application:
**15.02.84 Bulletin 84/07**

(45) Publication of the grant of the patent:
**19.11.87 Bulletin 87/47**

(84) Designated Contracting States:
**AT BE CH DE FR GB IT LI NL SE**

(56) References cited:
**GB-A-1 359 433**
**US-A-3 288 040**
**US-A-3 335 018**
**US-A-4 043 830**
**Patent Abstracts of Japan vol. 7, no. 122, 26 May 1983**
**Chemical Abstracts vol. 96, no. 20, 17 May 1982, Columbus, Ohio, USA page 326, column 2, abstract no. 167655m**
**Chemical Abstracts vol. 96, no. 18, 3 May 1982, Columbus, Ohio, USA page 340, column 1, abstract no. 147965j**

(73) Proprietor: **MISEAL, INC.**
**Suite 109 5405 Bandera Road**
**San Antonio Texas 78238 (US)**

(72) Inventor: **Mallow, William A.**
**6220 Culebra Road**
**San Antonio Texas 78284 (US)**

(74) Representative: **Perry, Robert Edward et al**
**GILL JENNINGS & EVERY 53-64 Chancery Lane**
**London WC2A 1HN (GB)**

Courier Press, Leamington Spa, England.

EP 0 100 656 B1

# 0 100 656

## Description

The present invention relates to soil stabilisation. In particular, it relates to compositions intended to provide non-shrinking, non-subsiding backfill for trenches or soil surfaces, which permits immediate restoration to a usable surface.

Many surfaces, such as paved surfaces, must be torn up from time-to-time, in order to attend to some sub-surface problem such as a ruptured pipe, or to install new underground facilities. Afterwards, sub-surface matter removed from the hole, formed in the operation, commonly known as "spoil", is then placed back in the hole and tamped into place. It is then necessary to wait until the surface has sufficiently stabilised before repaving. Where traffic surfaces are involved, the area must remain closed to traffic for a period of time. This problem is compounded in many cases where there has been, for example, a water leak and the soil in the area is wet.

It has been attempted to overcome these problems by including additive materials with the soil, usually materials such as quick lime in the form of stones. These are not suitable with dry spoil and, while generally suitable in cases where the soil is wet, they still are not sufficiently rapid in their action to provide a stable, non-shrinking, non-subsiding backfill which permits almost immediate restoration and use of a traffic surface.

US—A—3288040 discloses stabilising soil by adding a mixture of an alkali metal silicate and an alkali metal hexafluorosilicate; water is added simultaneously or subsequently.

US—A—4043830 discloses stabilising soil by injecting a mixture of water and gelling agent and a water glass solution containing gelling agent. Portland cement is used in exemplified water glass solutions.

Chem. Abs. (1982) 96:167655m discloses mixing a non-alkaline water glass solution with gypsum and, optionally, lime, cement or slag, and injecting the mixture into weak foundations.

According to one aspect of the present invention, a method of stabilising soil comprises mixing with the soil a pulverulent composition comprising Portland cement and a hydrated alkali metal silicate, and compressing the mixture. 1 to 5 parts by weight of the composition may be used per 100 parts by weight of soil.

According to a further aspect of the present invention, a pulverulent composition comprises from 50 to 80% by weight Portland cement, from 8 to 25% by weight of a hydrated alkali metal silicate, and from 2 to 10% by weight Plaster of Paris.

A preferred pulverulent composition according to the invention comprises from 50 to 80% by weight Portland cement, from 8 to 25% by weight of a mixture of hydrated sodium silicate and hydrated sodium metasilicate powders, from 4 to 10% by weight sodium silicofluoride, from 0.5 to 3% by weight of a blend of dimethyl esters of succinic, adipic and glutaric acids, and from 2 to 10% by weight Plaster of Paris.

The compositions of the invention may be used, in preferred aspects of the method of the invention.

Any commercially-available Portland cement can be used in the invention. The hydrated alkali metal silicate preferably comprises a mixture of hydrated sodium silicate and hydrated sodium metasilicate powders. Plaster of Paris can assist in stabilising the soil. Any commercial grade of plaster of paris is suitable.

Another preferred additive is a thickening agent, e.g. in an amount of 2 to 10% by weight. Suitable materials are naturally-occurring and synthetic polymers such as guar gum, polyvinyl alcohol, alginates, caseinates, acrylic polymer-starch products (acrylic-modified starches), mixtures thereof, and other materials that thicken in the presence of water. Guar gum is preferred, owing to its low cost. Acrylic-modified starches, such as the commercially-available Henkel SGP-502, alone or in combination with guar gum, give the best thickening results per unit weight, but are relatively costly.

When a composition of the invention is used in association with "normal" spoil, i.e. having a water content of about 7 to 10% by weight of the spoil, it is not necessary, for optimum effect, to use Plaster of Paris or a thickening agent. These additives are most preferably used when the spoil has a water content above 10% by weight of the spoil. It is generally the case that the need for, and the nature of, any additives to a composition of the invention are determined by the particulars of the spoil and, particularly, its water content. The given preferred ranges of amounts of the various materials can of course be varied, according to need and the particular soil conditions.

Another suitable additive to a composition of the invention is an alkali metal silicofluoride, e.g. sodium silicofluoride. A silicofluoride can act to provide rapid setting of treated soil, and the preferred amount is from 4 to 10% by weight.

It is preferred to use all the materials described above for fast-setting formulations, in moist conditions. In circumstances where slow-setting compositions can be used, no silicofluoride is necessary, but this can disadvantageously affect the speed of restoration of a traffic surface, prior to use. The use of silicofluoride should also be considered in relation to, if possible, effect on fluoride levels in sub-surface water tables.

If desired, other materials can be added to the composition in order to give effects not related to the performance of the product. For example, since the composition is to be used in the open, it may often be desirable to try and suppress the dustiness of the product in use, and commercially-available dust suppressants such as quaternary ammonium surfactants, e.g. Hyamine® 3500, can be used, e.g. in an amount of up to 3 parts by weight per 100 parts by weight of the composition. While such surfactants are initially effective, it has been found that they lose their efficacy in the composition after a short period of

2

time. It has been found that the diesters of dibasic acids are more suitable for use as dust suppressants since they maintain their effectiveness for longer periods of time. Examples of suitable diesters are dimethyl succinate, dimethyl glutamate, dimethyl adipate and (especially preferred) mixtures thereof. Such diesters may be used in an amount of up to 3 parts by weight per 100 parts by weight of the composition.

Moreover, colourants can be added to give a coloured surface when the composition is used as a soil cement, or if colour is to be used as an indicator of homogeneity of the blending of the composition with soil. Suitable colourants include iron oxides, carbon black and titania. These materials can be added in conventional amounts and for the usual effects.

For ease of formulation of a composition of the invention, it is preferred that the components to be used are in fine particulate form. This facilitates their thorough blending. Any conventional mixing device can then be used to give a substantially uniform composition.

A composition of the invention may be used by mixing it with spoil or soil. The term "spoil" includes soils comprising silt, sandy loam, clay, gravel and/or sand. In practice, the spoil, before being returned to the trench or other area to be filled or to be made water-resistant, is simply spread, the desired amount of the composition admixed therewith, and the entire mixture of spoil and stabilising composition then added to the, say, trench, and tamped into place. If the trench is in a paved surface it can be immediately repaved and restored to use by traffic. If the soil is unusually dry, i.e. having a water content below 7 to 10%, it is desirable to add water to the soil, either before or after addition of the soil stabilising composition of the invention, to raise the moisture content to at least 7%.

When using the composition as a soil cement, the surface to be treated is simply first scraped or otherwise loosened, and the composition admixed therewith. If the soil is dry, water is added to bring the soil water content up to 7 to 10%, the composition and the soil are mixed as uniformly as possible, and the soil is then simply tamped down, either with a tamp or by means of a conventional road roller.

Preferably, 4 to 5 parts by weight of the composition of the present invention are used per 100 parts by weight of the soil. While larger amounts can be used, and may be necessary, in some circumstances, this is generally uneconomic. In some instances, with dry or relatively stable soils, it is possible to use lower amounts of the composition, e.g. from 1 to 2 parts by weight.

Pulverulent compositions of the invention can be applied, as powders or slurries in water, to all varieties and classes of soils to achieve rapid drying of saturated soils, permit compaction or densification of the soil, induce rapid solidification, permit traffic use over the repair, and prevent subsidence and water-migration. The compositions of the invention can provide effective stabilisation of soils against subsidence, and are applicable under all weather conditions, such as snow, cold or heat.

The method of the invention is illustrated by the following Examples. Example 9 also illustrates the novel compositions. All proportions are in percent by weight of the total composition, unless otherwise stated.

Examples 1 to 7

Seven soil-stabilising compositions were made by mixing together the components in the proportions set forth below:

| Example | 1 | 2 | 3 | 4 | 5 | 6 | 7 |
|---|---|---|---|---|---|---|---|
| Portland Cement | 28 | 51 | 63 | 28 | 51 | 63 | 70 |
| Hydrated sodium silicate powder (Britesil® GA) | 46 | 31 | 23 | 46 | 31 | 23 | 0 |
| Sodium metasilicate hydrate | 0 | 0 | 0 | 0 | 0 | 0 | 9 |
| Sodium silicofluoride | 22 | 14 | 11 | 22 | 14 | 11 | 0 |
| Plaster of Paris | 0 | 0 | 0 | 0 | 0 | 0 | 18 |
| Guar gum (Guartec) | 0 | 0 | 0 | 0 | 0 | 0 | 4 |
| Acrylic-modified starch (Henkel SGP-502) | 4 | 4 | 3 | 0 | 4 | 3 | 0 |

Each of the compositions was vigorously blended with a water-saturated soil comprising silt, sandy loam, clay, gravel and sand, in the ratio of about 4 to 5 parts by weight of composition per 100 parts by weight of soil.

Laboratory tests were made on each of the stabilised soils for VICAT penetration, water-immersion

3

penetration, and overall compatibility. In each case, resistance to penetration increased rapidly with time to a maximum, in about one hour. Each composition retained its compressive strength even after immersion in water for periods of 24 to 72 hours; there was no significant penetration of water.

It was noted that the composition of Example 7 was slowest in setting. This is apparently due to the absence of hydrated sodium silicate powder.

Example 8

A composition was formed by mixing the following components:

|  | % by weight |
|---|---|
| Portland Cement | 67 |
| Hydrated sodium silicate powder | 3 |
| Sodium metasilicate hydrate | 8 |
| Plaster of Paris | 17 |
| Guar gum | 3 |
| Hyamine® 3500 | 2 |

The composition was field-tested, by being used to stabilise trenches made by the City Water Board of San Antonio, U.S.A. Spoil from the trenches was treated by being blended with this stabilising composition. 59 kg composition were used per cubic metre of spoil.

The blended mixture was then placed in the trench and tamped. In almost every instance, the tamped surface was immediately available for retopping and/or normal use. With very wet spoil, it required about 1 hour before retopping could be effected.

Example 9

A composition was formed by mixing the following components:

|  | % by weight |
|---|---|
| Portland Cement | 76 |
| Plaster of Paris | 4 |
| Hydrated sodium silicate powder | 3.3 |
| Sodium metasilicate hydrate powder | 15 |
| Mixed dimethyl esters of succinic, adipic and glutaric acids | 0.7 |
| Iron oxide (chrome free) | 1 |

The resultant composition was field-tested in the same manner as that of Example 8. Equally good results were obtained.

**Claims**

1. A pulverulent composition which comprises from 50 to 80% by weight Portland cement, from 8 to 25% by weight of a hydrated alkali metal silicate, and from 2 to 10% by weight Plaster of Paris.

2. A composition according to claim 1 which additionally comprises from 4 to 10% by weight of an alkali metal silicofluoride.

3. A composition according to claim 1 or claim 2, which additionally comprises from 0.5 to 3% by weight of a blend of dimethyl esters of succinic, adipic and glutaric acids.

4. A composition according to any preceding claim, in which the silicate comprises a mixture of hydrated sodium silicate and hydrated sodium metasilicate.

5. A pulverulent composition which comprises from 50 to 80% by weight Portland cement, from 8 to 25% by weight of a mixture of hydrated sodium silicate and hydrated sodium metasilicate powders, from 4 to 10% by weight sodium silicofluoride, from 0.5 to 3% by weight of a blend of dimethyl esters of succinic, adipic and glutaric acids, and from 2 to 10% by weight Plaster of Paris.

4

6. A method of stabilising soil, which comprises mixing with the soil a pulverulent composition comprising Portland cement and a hydrated alkali metal silicate, and compressing the mixture.

7. A method according to claim 6, in which the composition additionally comprises sodium silicofluoride.

8. A method according to claim 6 or claim 7, in which the composition is as defined in any of claims 1 to 5.

9. A method according to any of claims 6 to 8, in which from 1 to 5 parts by weight of the composition are used per 100 parts by weight of soil.

10. A method according to any of claims 6 to 9, in which the soil has a water content of from 7 to 10%, if necessary as the result of the addition of water.

## Patentansprüche

1. Pulverförmige Zusammensetzung mit einem Gehalt an 50 bis 80 Gew.-% Portlandzement, 8—25 Gew.-% hydratisiertem Alkalimetallsilikat und 2 bis 10 Gew.-% gebranntem Gips.

2. Zusammensetzung nach Anspruch 1, welche zusätzlich 4 bis 10 Gew.-% Alkalimetallsilicofluorid enthält.

3. Zusammensetzung nach Anspruch 1 oder 2, welche zusätzlich 0,5 bis 3 Gew.-% eines Gemisches aus Dimethylestern der Bernsteinsäure, Adipinsäure und Glutarsäure enthält.

4. Zusammensetzung nach einem der vorstehenden Ansprüche, worin das Silikat ein Gemisch aus hydratisiertem Natriumsilikat und hydratisiertem Natriummetasilikat umfaßt.

5. Pulverförmige Zusammensetzung mit einem Gehalt an 50 bis 80 Gew.-% Portlandzement, 8 bis 25 Gew.-% Pulvergemisch aus hydratisiertem Natriumsilikat und hydratisiertem Natriummetasilikat, 4 bis 10 Gew.-% Natriumsilicofluorid, 0,5 bis 3 Gew.-% Gemisch von Dimethylestern der Bernsteinsäure, Adipinsäure und Glutarsäure und 2 bis 10 Gew.-% gebranntem Gips.

6. Verfahren zur Bodenstabilisierung, welches ein Vermischen einer pulverförmigen Zusammensetzung mit einem Gehalt an Portlandzement und einem hydratisiertem Alkalimetallsilikat mit dem Boden und ein Verdichten des Gemisches umfaßt.

7. Verfahren nach Anspruch 6, worin die Zusammensetzung zusätzlich Natriumsilicofluorid enthält.

8. Verfahren nach Anspruch 6 oder 7, worin die Zusammensetzung eine solche ist, wie sie in einem der Ansprüche 1 bis 5 definiert ist.

9. Verfahren nach einem der Ansprüche 6 bis 8, worin 1 bis 5 Gewichtsteile der Zusammensetzung je 100 Gewichtsteile Boden verwendet werden.

10. Verfahren nach einem der Ansprüche 6 bis 9, worin der Boden einen Wassergehalt von 7 bis 10% aufweist, erforderlichenfalls als Ergebnis eines Wasserzusatzes.

## Revendications

1. Composition pulvérulente, qui comprend de 50 à 80% en poids de ciment de Portland, de 8 à 25% en poids d'un silicate de métal alcalin hydraté et de 2 à 10% en poids de Plâtre de Paris.

2. Composition selon la revendication 1, qui comprend en outre de 4 à 10% en poids d'un fluosilicate de métal alcalin.

3. Composition selon la revendication 1 ou 2, qui comprend en outre de 0,5 à 3% en poids d'un mélange d'esters diméthyliques d'acides succinique, adipique et glutarique.

4. Composition selon l'une quelconque des revendications précédentes, dans laquelle le silicate consiste en un mélange de silicate de sodium hydraté et de métasilicate de sodium hydraté.

5. Composition pulvérulente, qui comprend de 50 à 80% en poids de ciment de Portland, de 8 à 25% en poids d'un mélange de poudres de silicate de sodium hydraté et de métasilicate de sodium hydraté, de 4 à 10% en poids de fluosilicate de sodium, de 0,5 à 3% en poids d'un mélange d'esters diméthyliques d'acides succinique, adipique et glutarique et de 2 à 10% en poids de plâtre de Paris.

6. Procédé pour la stabilisation du sol, qui consiste à mélanger avec le sol une composition pulvérulente comprenant du ciment de Portland et un silicate de métal alcalin hydraté et à compresser le mélange.

7. Procédé selon la revendication 6, dans lequel la composition comprend en outre du fluosilicate de sodium.

8. Procédé selon la revendication 6 ou 7, dans lequel la composition est telle que définie dans l'une quelconque des revendications 1 à 5.

9. Procédé selon l'une quelconque des revendications 6 à 8, dans lequel on utilise de 1 à 5 parties en poids de la composition par 100 parties en poids du sol.

10. Procédé selon l'une quelconque des revendications 6 à 9, dans lequel le sol a une teneur en eau de 7 à 10%, résultant si nécessaire de l'addition d'eau.